# EUROPEAN PATENT APPLICATION

(11) **EP 4 718 540 A1**
(43) Date of publication of application: **01.04.2026**
(21) Application number: 25191816.5
(22) Date of filing: 25.07.2025
(51) Int. Cl.: H01M 4/62

(54) **ELECTRODE, SECONDARY BATTERY, BATTERY PACK, AND VEHICLE**

(30) Priority: 19.09.2024 JP 2024162110
(71) Applicant: Kabushiki Kaisha Toshiba, Tokyo 105-0023 (JP)
(72) Inventor: HOSHINA, Keigo, Minato-ku, Tokyo, 105-0023 (JP); TAKAHASHI, Keitaro, Minato-ku, Tokyo, 105-0023 (JP); KANO, Kento, Minato-ku, Tokyo, 105-0023 (JP); MURATA, Yoshiaki, Minato-ku, Tokyo, 105-0023 (JP); HARADA, Yasuhiro, Minato-ku, Tokyo, 105-0023 (JP); TAKAMI, Norio, Minato-ku, Tokyo, 105-0023 (JP)
(74) Representative: Hoffmann Eitle

(57) **Abstract**

According to one approach, provided is an electrode (10) including a plurality of active material particles (11) and fibrous carbon (12). The fibrous carbon (12) includes a first portion (C1) having a fiber diameter W1 within a range of 60 nm or more and 500 nm or less and a second portion (C2) having a fiber diameter W2 smaller than the fiber diameter W1. At least part of the second portion (C2) is in contact with plurality of the active material particles (11).

## Description

### FIELD

Approaches relate to an electrode, secondary battery, battery pack, and vehicle.

### BACKGROUND

Lithium ion batteries that are charged and discharged by lithium ions moving between a negative electrode and a positive electrode, for example, nonaqueous electrolyte batteries have been actively investigated as high energy density batteries.

A typical electrode of a secondary battery such as a lithium-ion battery contains, in addition to an electrode active material that contributes to charge and discharge by insertion and extraction of lithium ions being performed, an electro-conductive agent for increasing the electrical conductivity of the electrode. Carbon materials are widely used as electro-conductive agents incorporated into the electrode.

### BRIEF DESCRIPTION OF THE DRAWINGS

FIG. 1 is a cross-sectional view schematically showing an example of an electrode according to an approach.
FIG. 2 is an enlarged cross-sectional view of section A of the electrode shown in FIG. 1.
FIG. 3 is a cross-sectional view schematically showing an example of a conventional electrode.
FIG. 4 is a cross-sectional view schematically showing an example of a secondary battery according to an approach.
FIG. 5 is an enlarged cross-sectional view of section B of the secondary battery shown in FIG. 4.
FIG. 6 is a partially cut-out perspective view schematically showing another example of the secondary battery according to an approach.
FIG. 7 is an enlarged cross-sectional view of section C of the secondary battery shown in FIG. 6.
FIG. 8 is a perspective view schematically showing an example of a battery module according to an approach.
FIG. 9 is an exploded perspective view schematically showing an example of a battery pack according to an approach.
FIG. 10 is a block diagram showing an example of an electric circuit of the battery pack shown in FIG. 9.
FIG. 11 is a partially see-through diagram schematically showing an example of a vehicle according to an approach.
FIG. 12 is a diagram schematically showing an example of a control system related to an electric system in the vehicle according to an approach.

### DETAILED DESCRIPTION

According to one approach, provided is an electrode including a plurality of active material particles and fibrous carbon. The fibrous carbon includes a first portion having a fiber diameter W1 within a range of 60 nm or more and 500 nm or less and a second portion having a fiber diameter W2 smaller than the fiber diameter W1. At least part of the second portion is in contact with plurality of the active material particles.

According to another approach, provided is a secondary battery including a positive electrode, a negative electrode, and an electrolyte. At least one of the positive electrode and the negative electrode is the electrode according to the above approach.

According to another approach, provided is a battery pack including the secondary battery according to the above approach.

According to another approach, provided is a vehicle including the battery pack according to the above approach.

The above approaches can provide an electrode that can provide a secondary battery and battery pack that exhibit high input/output density, and a vehicle having the battery pack installed thereon.

In order to obtain a low-resistance electrode, in general, a large amount of carbon material such as particulate carbon or fibrous carbon is added. However, in a case where a large amount of particulate carbon or fibrous carbon is added, the volume ratio of carbon in the electrode body would be great. In an electrode using a metal oxide as an active material, the ratio of the active material would be small in such a case, and thus, an electrode having high input/output density per volume can hardly be obtained. Although use of a small amount of fibrous carbon having small fiber diameter to thereby increase input/output density while suppressing the carbon ratio of the electrode body is conceivable, the thin fibrous carbon is difficult to disperse or form into an electrode, making sufficient input/output density difficult to obtain.

Hereinafter, approaches will be described with reference to the drawings. The same reference signs are applied to common components throughout the approaches and overlapping explanations are omitted. Each drawing is a schematic view for explaining the approach and promoting understanding thereof; though there may be differences in shape, size and ratio from those in an actual device, such specifics can be appropriately changed in design taking the following explanations and known technology into consideration.

### (First Approach)

According to a first approach, an electrode is provided. The electrode includes active material particles and fibrous carbon. The fibrous carbon includes a first portion and a second portion. The first portion has a fiber diameter W1 within a range of 60 nm or more and 500 nm or less. The second portion has a fiber diameter W2 smaller than the fiber diameter W1 of the first portion. The electrode includes a plurality of the active material particles, and at least part of the second portion of the fibrous carbon is in contact with plurality of the active material particles.

In a such an electrode, both a good electrical conductive path and high density can be achieved. Therefore, the input/output density of the electrode is high. Specifically, by containing a fibrous carbon material having different fiber diameters as an electro-conductive agent, the electrical resistance of the electrode is low, and an electrically conductive path is easily formed. Furthermore, even if the density of the electrode is increased, vacancies within the electrode can be secured, and therefore the diffusion of liquid within the electrode is hardly inhibited. Thus, also from the fact that the diffusion of a liquid electrolyte, that is, an electrolytic solution within the electrode is good, the input and output of the secondary battery can be made excellent.

The electrode may include a current collector and an active material-containing layer. The active material-containing layer may be formed on both of obverse and reverse surfaces or on one surface of the current collector. The active material-containing layer contains an active material and an electro-conductive agent, and may optionally contain a binder. The electro-conductive agent at least contains the above-described fibrous carbon including the first portion and the second portion. The electro-conductive agent may further contain other materials described later, such as particulate carbon. The current collector may include, on its surface, a portion where the active material-containing layer is not formed thereon. This portion can serve as a current-collecting tab.

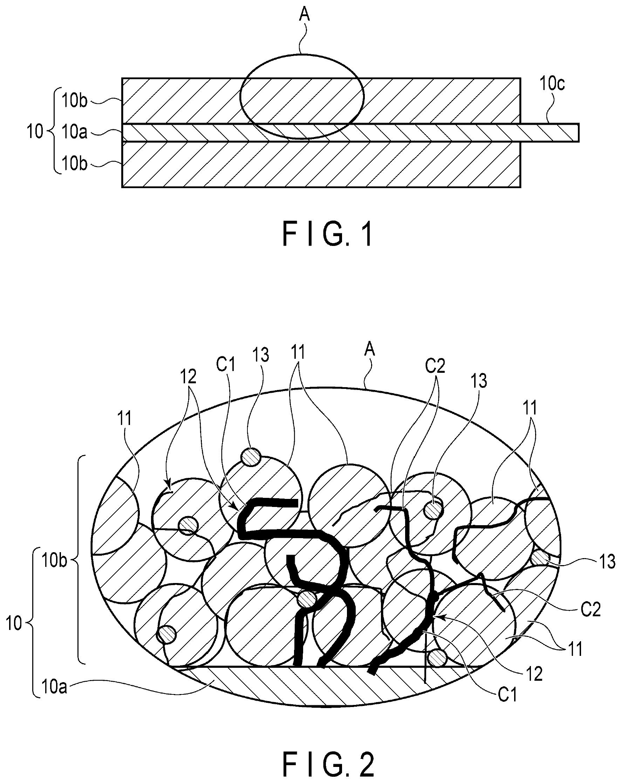

FIGS. 1 and 2 show an example of an electrode according to the approach. FIG. 1 schematically shows a cross section of the electrode, and FIG. 2 is an enlarged cross-sectional view of section A in FIG. 1.

An electrode 10 shown as an example includes a current collector 10a and active material-containing layers 10b provided on both obverse and reverse surfaces of the current collector 10a. At a part of the current collector 10a, the active material-containing layer 10b is neither provided on the obverse surface nor the reverse surface thereof, and this part can serve as a current-collecting tab 10c. The active material-containing layer 10b contains a plurality of active material particles 11 and fibrous carbon 12.

The fibrous carbon 12 includes first portions C1 each having a large fiber diameter and second portions C2 each having a small fiber diameter. By containing fibrous carbon 12 including both thick first portions C1 and thin second portions C2, the electrode 10 can provide a secondary battery excellent in input/output performance because a good electrical conductive path can be formed in the active material-containing layer 10b. Further, since an electrically conductive path can be formed with a small amount of fibrous carbon 12, the fibrous carbon 12 does not take up space, and so the density of the active material-containing layer 10b can be increased while vacancies between active material particles 11 are secured. Thus, the electrode 10 can provide a secondary battery having high input/output density.

As shown in the drawing, the first portion C1 and the second portion C2 can be different strands of fibrous carbon 12; or as with a portion toward the right in FIG. 2, where a plurality of second portions C2 are branched from a first portion C1, different portions of the same strand of fibrous carbon 12 may respectively be a first portion C1 and a second portion C2. A case of containing fibrous carbon 12 having a first portion C1 and a second portion C2 that are integrated, like in the latter, tends to form a stronger electrically conductive path. In the active material-containing layer 10b including both first portions C1 and second portions C2 as shown in the drawing, both the first portion C1 and the second portion C2 may be in contact with a plurality of active material particles 11; however, second portions C2, which are thin and can be better dispersed, are apt to be more reliably in contact with larger amounts of active material particles 11.

In the depicted example, the active material-containing layer 10b further contains fine oxide particles 13 on the surface of active material particles 11. The fine oxide particles 13 can, for example, be generated by adjusting synthesis conditions at the time of active material synthesis, or be generated on particle surfaces after active material synthesis, as described later. By having fine oxide particles 13 present on the particle surfaces of active material particles 11, contact between the fibrous carbon 12 and the active material particles 11 is improved.

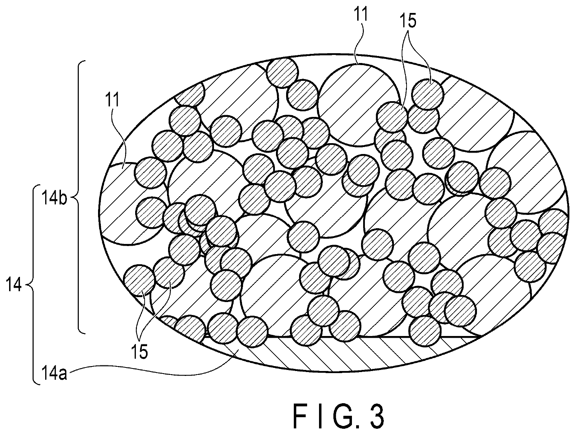

For comparison, an example of a conventional electrode is shown in FIG. 3. FIG. 3 shows an enlarged cross section similar to FIG. 2. An example conventional electrode 14 includes a current collector 14a and an active material-containing layer 14b provided thereon and containing active material particles 11, as well. In the conventional example, however, the active material-containing layer 14b contains particulate carbon 15 as an electro-conductive agent instead of fibrous carbon 12.

Unlike fibrous carbon 12, particulate carbon 15 is bulky. An electrode body in which, like in the electrode 14 shown as an example, a large amount of bulky particulate carbon 15 is incorporated to enhance electrical conductivity is thick, and hardly attains good input/output density. In addition, a large amount of particulate carbon 15 present gives rise to concern that the particulate carbon 15 may be aggregated as shown in the drawing. If the particulate carbon 15 is aggregated, electrode density is further reduced, or the formation of an electrically conductive path would be poor. When high electrical conductivity is attempted to be obtained using only particulate carbon 15, in this manner, a large amount of particulate carbon 15 would be used, making electrode volume great, whereby good input/output density can hardly be obtained.

The fibrous carbon is, for example, carbon nanotube (CNT). The first portion C1 may be, for example, a portion where single-walled carbon nanotubes (SWCNTs) had become bundled. The second portion C2 may be, for example, SWCNT that had not bundled. The fibrous carbon in which a first portion C1 and a second portion C2 are integrated may be, for example, a material in which a bundle of a first portion C1 is partially frayed and divided into second portions C2. The CNT is not limited to SWCNT, and a carbon nanotube of two or more layers (for example, a few-walled carbon nanotube; FWCNT) or the like can be used, as well.

By the active material-containing layer including, for example, a first portion C1 such as a CNT in a bundled state, current efficiency is locally improved in the active material-containing layer, which leads to a reduction in resistance throughout the entire electrode. Second portions C2 can be better dispersed within the active material-containing layer than first portions C1, and at least a part of the second portions C2 contact a plurality of active material particles. By the dispersion of second portions C2, the fibrous carbon can be scattered throughout the entire active material-containing layer, and local unreactive portions or high resistance portions within the electrode can be eliminated. In a case where first portions C1 are not contained and second portions C2 are incorporated alone as fibrous carbon, the second portions C2 are difficult to disperse. By using second portions C2 in combination with first portions C1, dispersion in the active material-containing layer can be improved, and a good electrically conductive path can be formed.

The fiber diameter W1 of the first portion C1 is within the range of 60 nm or more and 500 nm or less. A first portion C1 having a fiber diameter W1 of 60 nm or more provides the above-mentioned effect of reducing the electrical resistance of the electrode to a high extent. By limiting the fiber diameter W1 to 500 nm or less, the first portion C1 is kept from taking up space, and therefore the density of the active material-containing layer can be increased, and the ratio of active material particles in the active material-containing layer can be increased, too; thus, the energy density of the electrode can be increased.

The fiber diameter W2 of the second portion C2 is smaller than the fiber diameter W1. The fiber diameter W2 can be, for example, in the range of 1 nm or more and 15 nm or less. In a case where the fiber diameter W2 is in this range, aggregation of second portions C2 is reduced, and dispersion is improved; thus, a fiber diameter W2 of 1 nm or more and 15 nm or less is preferable.

The proportions of first portions C1 and second portions C2 among the fibrous carbon can be, for example, such a proportion such that the area ratio between the area A1 occupied by first portions C1 and the area A2 occupied by second portions C2 on the electrode surface satisfies 0.5 < A1/A2 < 50. Namely, of the fibrous carbon, the proportion that first portions C1 takes account of may be greater, or the proportion that the second portions C2 takes account of may be greater. Both portions are desirably present in a well-balanced manner, with neither being extremely few. Since the first portion C1, which has a larger diameter, has a larger area per length, in a case where first portions C1 and second portions C2 of the same fiber length are present on the electrode surface, the area ratio A1/A2 exceeds 1.

The longer the fiber length of the fibrous carbon, the larger the number of active material particles in the electrode that the fibrous carbon can span over, forming a better electrical conductive path. For example, the fibrous carbon on the electrode surface can include those in which the ratio of the length L of the fibrous carbon to the fiber diameter W2 of the second portion C2 satisfies 100 < L/W2. A method for measuring the length L of the fibrous carbon will be described later.

Such an electrode may be, for example, at least one of a positive electrode and a negative electrode of a battery. In a battery including such an electrode as a negative electrode, the positive electrode may be an electrode other than the electrode according to the approach. Conversely, in a battery including such an electrode as a positive electrode, the negative electrode may be an electrode other than the electrode according to the first approach. Both a negative electrode and a positive electrode included in a battery can be electrodes according to the first approach.

The electrode according to the approach will now be described in detail.

The active material-containing layer may contain one species of active material alone, or may contain two or more species of active materials. The electrode may, for example, in an aspect as a negative electrode, contain negative electrode active materials described below in the active material-containing layer (a negative electrode active material-containing layer), and in an aspect as a positive electrode, contain positive electrode active materials described below in the active material-containing layer (a positive electrode active material-containing layer).

Examples of negative electrode active materials include oxides of titanium, lithium titanate, niobium titanium oxides, niobium oxides, and the like. Specific examples include lithium titanate having a ramsdellite structure (e.g., Li_{2+y}Ti₃O₇, 0 ≤ y ≤ 3), lithium titanate having a spinel structure (e.g., Li₄₊ₓTi₅O₁₂, 0 ≤ x ≤ 3), titanium dioxide (TiO₂), anatase titanium dioxide, rutile titanium dioxide, niobium pentoxide (Nb₂O₅), hollandite titanium composite oxide, orthorhombic titanium composite oxides, and monoclinic niobium titanium oxides. Among the above, examples of compounds more favorable as the negative electrode active material include lithium titanate having a spinel structure and monoclinic niobium titanium oxides.

Examples of the orthorhombic titanium-containing composite oxide include a compound represented by Li₂₊ₐM^{I}_{2-b}Ti_{6-c}M^{II}_{d}O_{14+σ}. Here, M^{I} is at least one selected from the group consisting of Sr, Ba, Ca, Mg, Na, Cs, Rb and K. M^{II} is at least one selected from the group consisting of Zr, Sn, V, Nb, Ta, Mo, W, Y, Fe, Co, Cr, Mn, Ni and Al. The respective subscripts in the composition formula are specified as follows: 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing composite oxide include Li₂₊ₐNa₂Ti₆O₁₄ (0 ≤ a ≤ 6).

Examples of the monoclinic niobium titanium oxide include a compound represented by LiₓTi_{1-y}M1_{y}Nb_{2-z}M2_{z}O_{7+δ}. Here, M1 is at least one selected from the group consisting of Zr, Si, and Sn. M2 is at least one selected from the group consisting of V, Ta, and Bi. The respective subscripts in the composition formula are specified as follows: 0 ≤ x ≤ 5, 0 ≤ y < 1, 0 ≤ z < 2, and -0.3 ≤ δ ≤ 0.3. Specific examples of the monoclinic niobium titanium composite oxide include LiₓNb₂TiO₇ (0 ≤ x ≤ 5).

Another example of the monoclinic niobium titanium oxide is a compound represented by LiₓTi_{1-y}M3_{y+z}Nb_{2-z}O_{7-δ}. Here, M3 is at least one selected from the group consisting of Mg, Fe, Ni, Co, W, Ta, and Mo. The respective subscripts in the composition formula are specified as follows: 0 ≤ x < 5, 0 ≤ y < 1, 0 ≤ z < 2, and -0.3 ≤ δ ≤ 0.3.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium nickel manganese composite oxides having a spinel structure (e.g., LiₓNi_{y}Mn_{2-y}O₄; 0 < x ≤ 1, 0 < y < 2), lithium transition metal phosphates having an olivine structure (e.g., LiₓFePO₄; 0 < x ≤ 1, LiₓMnPO₄; 0 < x ≤ 1, LiₓFe_{1-y}Mn_{y}PO₄; 0 < x ≤ 1, 0 < y ≤ 1, and LiₓCoPO₄; 0 < x ≤ 1), iron sulfate (Fe₂(SO₄)₃), vanadium oxides (e.g., V₂O₅), and lithium nickel cobalt manganese composite oxide (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium nickel manganese composite oxides having a spinel structure (e.g., LiₓNi_{y}Mn_{2-y}O₄; 0 < x ≤ 1, 0 < y < 2), lithium manganese cobalt composite oxide (e.g., LiₓMn_{y}Co_{1-y}O₂; 0 < x ≤ 1, 0 < y < 1), lithium iron phosphates (e.g., LiₓFePO₄; 0 < x ≤ 1), lithium nickel cobalt manganese composite oxides (LiₓNi_{1-y-z}Co_{y}Mn_{z}O₂; 0 < x ≤ 1, 0 < y < 1, 0 < z < 1, y + z < 1), and lithium transition metal phosphates having an olivine structure (e.g., LiₓFePO₄; 0 < x ≤ 1, LiₓMnPO₄; 0 < x ≤ 1, LiₓFe_{1-y}Mn_{y}PO₄; 0 < x ≤ 1, 0 < y ≤ 1, and LiₓCoPO₄; 0 < x ≤ 1). The positive electrode potential can be made high by using these positive electrode active materials. Specific examples include one or more positive electrode active material selected from the group consisting of the lithium nickel cobalt manganese composite oxides, lithium transition metal phosphates, and lithium nickel manganese composite oxides described above.

When an ambient temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later, in explaining the second approach.

The primary particle diameter of the positive electrode active material is preferably from 100 nm to 1 µm. The positive electrode active material having a primary particle size of 100 nm or more is easy to handle during industrial production. In the positive electrode active material having a primary particle size of 1 µm or less, in-solid diffusion of lithium ions can proceed smoothly.

The specific surface area of the positive electrode active material is preferably from 0.1 m²/g to 10 m²/g. With the positive electrode active material having a specific surface area of 0.1 m²/g or more, sufficient sites for inserting and extracting Li ions can be secured. The positive electrode active material having a specific surface area of 10 m²/g or less is easy to handle during industrial production, and can secure a good charge and discharge cycle performance.

The electro-conductive agent is added to improve current collection performance and to suppress the contact resistance between the active material and the current collector. The electro-conductive agent at least includes the fibrous carbon including the first portion C1 and the second portion C2. Other electro-conductive agents may be included, in addition to the fibrous carbon. Examples of other electro-conductive agents include carbonaceous substances such as vapor grown carbon fiber (VGCF), carbon blacks such as acetylene black, graphite, multi-walled carbon nanotubes (MWCNT), and carbon nanofibers. One of these may be used as the other electro-conductive agent, or alternatively, two or more may be used in combination as the other electro-conductive agent. Alternatively, instead of using the other electro-conductive agent, a carbon coating or an electro-conductive inorganic material coating may be applied to the surface of the active material particle.

The binder is added to fill gaps among the dispersed active material and also to bind the active material with the current collector. Examples of the binder include polytetrafluoroethylene (PTFE), polyvinylidene fluoride (PVdF), fluororubber, styrene-butadiene rubber, polyacrylate compounds, imide compounds, carboxymethyl cellulose (CMC), and salts of CMC. One of these may be used as the binder, or alternatively, two or more may be used in combination as the binder.

The blending proportions of the active material, fibrous carbon, other electro-conductive agent, and binder in the active material-containing layer can be varied according to the use of the electrode, as appropriate. For example, in the case of an aspect of a negative electrode, in the active material-containing layer, the active material (negative electrode active material), fibrous carbon, other electro-conductive agent, and te binder are preferably blended in proportions of 68 mass% or more and 97 mass% or less, 0.1 mass% or more and 1 mass% or less, 0 mass% or more and 1 mass% or less, and 2 mass% or more and 30 mass% or less, respectively. In the case of an aspect of a positive electrode, in the active material-containing layer, the active material (positive electrode active material), fibrous carbon, other electro-conductive agent, the binder are preferably blended in proportions of 77 mass% or more and 97 mass% or less, 0.15 mass% or more and 1 mass% or less, 0 mass% or more and 1 mass% or less, and 2 mass% or more and 15 mass% or less, respectively. By setting the amount of the binder to 2 mass% or more, binding between the active material-containing layer and the current collector is made sufficient, and excellent cycle performance can be expected. In order to increase the capacity, the amount of the binder is preferably set to 30 mass% or less.

For both the aspects of a positive electrode and a negative electrode, the total amount of carbon materials contained as electro-conductive agents, that is, the total amount of the fibrous carbon and carbon materials as other electro-conductive agents is preferably 2 mass% or less. By containing, as at least part of the electro-conductive agent, fibrous carbon including first portions C1 and second portions C2, the current collection performance of the active material-containing layer can be improved while the total amount of electro-conductive agents is reduced. By reducing the amount of carbon materials contained in the active material-containing layer, the amount of active material can be increased, and a high-capacity electrode can be obtained. The content of particulate carbon such as carbon black and graphite is preferably small, and more preferably, no particulate carbon is contained. By reducing or eliminating the amount of bulky particulate carbon, an electrode having high energy density can be obtained.

There may be used for the current collector, a material which is electrochemically stable at the potential (vs. Li/Li⁺) at which lithium (Li) is inserted into and extracted from the active material. For example in the case of the aspect as a negative electrode, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 µm to 20 µm. The current collector having such a thickness can maintain balance between the strength and weight reduction of the electrode.

For the aspect as a positive electrode, the current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The density of the negative electrode active material-containing layer (not including the current collector) is preferably 1.8 g/cm³ or more and 2.8 g/cm³ or less. The density of the negative electrode active material-containing layer is more preferably 2.1 g/cm³ or more and 2.7 g/cm³ or less. The density of the positive electrode active material-containing layer (not including the current collector) is preferably 1.8 g/cm³ or more and 3.5 g/cm³ or less. The density of the positive electrode active material-containing layer is more preferably 2.1 g/cm³ or more and 3.3 g/cm³ or less. An electrode in which the density of the active material-containing layer is in this range is excellent in energy density and electrolyte retainability.

### <Manufacturing method>

The electrode may be fabricated by the following method, for example. First, active material, electro-conductive agent, and binder are suspended in a solvent to prepare a slurry. The slurry is applied onto one surface or both of obverse and reverse surfaces of a current collector. Next, the applied slurry is dried so as to obtain a stack of active material-containing layer and current collector. Then, the stack is subjected to pressing. The electrode can be fabricated in this manner.

Alternatively, the electrode may also be fabricated by the following method. First, active material, electro-conductive agent, and binder are mixed to obtain a mixture. Next, the mixture is formed into pellets. Then the electrode can be obtained by arranging the pellets onto the current collector.

In a case where an active material having fine particles of an oxide on the particle surface is used, fine particles can be generated after or during synthesis of active material particles. In a case where, for example, fine particles are generated on the surfaces of monoclinic niobium titanium oxide (TNO) particles after synthesis, fine oxide particles of about 100 nm are mixed with fired TNO active material particles, and heat treatment is performed at 300°C to 400°C. Thereby, fine particles are generated on the surfaces of TNO active material particles.

In a case where, for example, fine particles are generated during synthesis of TNO active material particles, TiO₂ and Nb₂O₅ are used as raw materials and mixed, then, before firing, the mixture is pulverized into fine pieces. The pulverization is preferably performed until, arriving at about 10 nm to 100 nm in the particle size D₁₀ at which the cumulative frequency of volume from the small particle size side is 10%, in particle size distribution measurement of powder.

### <Measurement method>

Next, a method of measuring an electrode is described. Specifically, observation and measurement of an electrode surface with a scanning electron microscope (SEM), and a method of measuring carbon materials and active materials contained in an electrode are described.

As a sample for measurement, an electrode that has not been incorporated into a battery, or an electrode that has been taken out from a disassembled battery may be used. In the case of using a sample taken out from a disassembled battery, the sample is subjected to washing with an organic solvent in order to eliminate residual lithium salt. The sample may be first immersed in a cyclic carbonate having a high lithium salt solubility, and then immersed and washed in a linear carbonate, so that the residual amount of lithium salt can be sufficiently lowered. After the immersion, pressure is reduced and the solvent is removed under vacuum.

### (SEM observation of electrode)

By observing a surface of an electrode sample with a SEM, the presence of fibrous carbon including first portions C1 and second portions C2 can be examined. Further, the diameter W1 and the area A1 of the first portion C1, the diameter W2 and the area A2 of the second portion C2, and the length L of fibrous carbon can be measured.

A SEM image of the electrode surface is acquired, and the obtained SEM image is subjected to binarization processing. In the binarization processing, a threshold is set so that active material particles and carbon materials such as fibrous carbon and particulate carbon can be distinguished. Image-J or the like can be used as the software.

Fibrous carbon and particulate carbon have different shapes. Fibrous carbon has a high aspect ratio, having more length as compared to the fiber diameter, and may have straight portions and/or curved portions. Carbon having an aspect ratio of 5 or more is regarded as fibrous carbon. Fibrous carbon may be in contact with a plurality of active material particles or particulate carbon particles. Particulate carbon has a low aspect ratio, and can be present in such a manner where irregularly shaped particles are present alone or in a row. Carbon having an aspect ratio of 3 or less is regarded as particulate carbon. With the diameter of particulate carbon defined as being the diameter of the largest circle inscribed in the particle, for example, the diameter of one grain of particle may be 800 nm or less. Further, the diameter of one grain of particle may be 400 nm or less.

The fiber diameter of fibrous carbon is estimated from an image after binarization processing. The first portion C1 is a portion having a fiber diameter W1 of 60 nm to 500 nm in the binarized image. Portions having a fiber diameter close to 60 nm to 500 nm can be detected from the image. For the fiber diameter W1, a straight line of 50 nm is drawn along one side of the fiber, then a perpendicular line to the straight line is drawn, and the distance from an end to another end of the fiber along the perpendicular line is taken as the fiber diameter. Fibrous carbon can be present on active material particles, on particulate carbon particles, and between particles.

The second portion C2 is a portion having a smaller fiber diameter than the first portion C1, and preferably has a fiber diameter of 1 nm to 15 nm. A portion smaller than 60 nm can be detected from the image. Like in the measurement of the fiber diameter W1 of the first portion C1, for the fiber diameter W2, a straight line of 50 nm is drawn along one side of the fiber, a perpendicular line to the straight line is drawn, and the distance to an end of the fiber along the perpendicular line is taken as the fiber diameter W2.

From the image after binarization processing, the area A1 of first portions C1 and the area A2 of second portions C2 can be determined using image analysis software.

Fibrous carbon observed in the SEM image preferably satisfies 100 < L/W2. The length L is determined in a strand of fibrous carbon that satisfies W2 at least in part. The length L may not necessarily be straight. For fibrous carbon including curves, the length L is determined from image analysis software. Fibrous carbon may be present spanning over a plurality of active material particles. Further, fibrous carbon may be present in a branched manner. In a case of a branched manner, any branch may be selected for determining the length L.

### (Method of measuring carbon materials)

The amount of carbon materials contained in the electrode can be measured by thermogravimetry (TG). Since burnout temperature differs between fibrous carbon and particulate carbon, the amount of fibrous carbon and the amount of particulate carbon can each be measured by TG. Specifically, TG measurement is performed in air, holding at 500°C for 1 hour, and the amount of decrease in weight is taken as the weight of the binder. After that, the temperature is raised and held at 650°C for 1 hour, and the amount of decrease in weight is taken as the weight of fibrous carbon. After that, the temperature is raised again and held at 800°C for 1 hour, and the amount of decrease in weight is taken as the weight of particulate carbon.

### (Method of measuring active material)

The composition of active material(s) included in an electrode can be determined by measuring as described below.

The composition of active material included in the electrode, for example, in the active material-containing layer, can be examined by combining elemental analysis with a scanning electron microscope equipped with an energy dispersive X-ray spectrometry scanning apparatus (SEM-EDX), X-ray diffraction (XRD) measurement, and inductively coupled plasma (ICP) emission spectrometry. By SEM-EDX analysis, shapes of components contained in the active material-containing layer and compositions of the components contained in the active material-containing layer (each element from B to U in the periodic table) can be known. Elements within the active material-containing layer can be quantified by ICP measurement. Crystal structures of materials included in the active material-containing layer can be examined by XRD measurement.

A cross-section of the electrode taken out as described above is cut out by Ar ion milling. The cut out cross-section is observed with the SEM. Sampling is performed in an inert atmosphere such as argon or nitrogen to avoid exposure to the air. Several particles are selected from SEM images at 3000-fold magnification. Here, particles are selected such that a particle diameter distribution of the selected particles becomes as wide as possible.

Next, elemental analysis is performed on each selected particle by EDX. Accordingly, identities and quantities of elements other than Li can be specified, among the elements contained in each selected particle.

With regard to Li, information regarding the Li content in the entire active material can be obtained by ICP emission spectrometry. ICP emission spectrometry is performed according to the following procedure.

From the dried electrode, a powder sample is prepared in the following manner. The active material-containing layer is dislodged from the current collector and ground in a mortar. The ground sample is dissolved with acid to prepare a liquid sample. Here, hydrochloric acid, nitric acid, sulfuric acid, hydrogen fluoride, and the like may be used as the acid. The concentration of elements included in the active material being measured can be found by subjecting the liquid sample to ICP analysis.

Crystal structure(s) of compound(s) included in each of the particles selected by SEM can be specified by XRD measurement. XRD measurement is performed within a measurement range where 2θ is from 5 degrees to 90 degrees, using CuKα ray as a radiation source. By this measurement, X-ray diffraction patterns of compounds contained in the selected particles can be obtained.

As an apparatus for XRD measurement, SmartLab manufactured by Rigaku is used, for example. Measurement is performed under the following conditions:
X ray source: Cu target
Output: 45 kV, 200 mA
soller slit: 5 degrees in both incident light and received light
step width (2θ): 0.02 deg
scan speed: 20 deg/min
semiconductor detector: D/teX Ultra 250
sample plate holder: flat glass sample plate holder (0.5 mm thick)
measurement range: range of 5° ≤ 2θ ≤ 90°

When another apparatus is used, measurement using a standard Si powder for powder X-ray diffraction is performed to seek conditions at which measurement results of peak intensities, half-widths, and diffraction angles are equivalent to results obtained by the above apparatus, and measurement is conducted at those conditions.

Conditions of the XRD measurement is set, such that an XRD pattern applicable to Rietveld analysis is obtained. In order to collect data for Rietveld analysis, specifically, the step width is made 1/3 to 1/5 of the minimum half width of the diffraction peaks, and the measurement time or X-ray intensity is appropriately adjusted in such a manner that the intensity at the peak position of strongest reflected intensity is 5,000 cps or more.

The XRD pattern obtained as described above is analyzed by the Rietveld method. In the Rietveld method, the diffraction pattern is calculated from the crystal structure model that has been estimated in advance. Here, estimation of the crystal structure model is performed based on analysis results of EDX and ICP. The parameters of the crystal structure (lattice constant, atomic coordinate, occupancy ratio, or the like) can be precisely analyzed by fitting all the calculated values with the measured values.

Through Rietveld analysis, for example, in such a case where plural active materials are included in the negative electrode, the content of titanium-niobium composite oxide can be estimated. A fitting parameter S is used as the scale for estimating the degree of agreement between the measured intensities and the calculated intensities in the Rietveld analysis. Analysis must be made in such a manner that the S value turns out less than 1.8. When determining the occupancies in each of the sites, the standard deviation σj must also be taken into consideration. The fitting parameter S and standard deviation σj defined herein are estimated using the formula described in "Funmatsu X sen Kaisetsu no Jissai (Reality of Powder X-Ray Analysis)", 1st edition (2002), X-Ray Analysis Investigation Conversazione, The Japan Society for Analytical Chemistry, written and edited by Izumi Nakai and Fujio Izumi (Asakura Publishing Co., Ltd.).

XRD measurement can be performed with the electrode sample directly attached onto a glass holder of a wide-angle X-ray diffraction apparatus. At this time, an XRD spectrum is measured in advance in accordance with the species of metal foil of the electrode current collector, and the position(s) of appearance of the peak(s) derived from the collector is ascertained. In addition, the presence/absence of peak(s) of mixed substances such as an electro-conductive agent or a binder is also ascertained in advance. If the peak(s) of the current collector overlaps the peak (s) of the active material, measurement is desirably performed with the active material-containing layer removed from the current collector. This is in order to separate the overlapping peaks when quantitatively measuring the peak intensities. As a matter of course, the above operations can be omitted if the overlapping peaks has been ascertained beforehand.

For example, when the particles observed by the aforementioned SEM-EDX measurement contain Ti, Nb and O, and furthermore, if an X-ray diffraction pattern assigned to monoclinic is obtained from an electrode measured by the aforementioned XRD measurement, such results indicate that particles of monoclinic titanium-niobium composite oxide are present in the active material measured. When EDX measurement shows that the active material includes particles having contents of Ti and Nb that differ greatly, there is a possibility that the active material-containing layer contains plural of active materials. Amounts of elements contained in the active material in the electrode can be specified by ICP emission spectrometry according to the above procedure.

The content of the active material in the active material-containing layer can be estimated by the following method.

The electrode taken out from the battery according to the procedure described above is washed and dried, and then the active material-containing layer is dislodged from the current collector and ground in a mortar. The ground sample is placed in a glass sample plate and leveled so that sample surface matches the surface of the glass sample plate. In addition, a Si standard sample may be added to correct the peak position.

The powder sample charged into the glass sample plate is subjected to XRD measurement and Rietveld analysis under the conditions described above. In addition, using the powder sample, SEM-EDX measurement and ICP measurement are performed according to the above-described procedure. The contained active material species and ratio thereof can be estimated in view of the results of XRD measurement, SEM-EDX measurement, and ICP measurement.

The electrode according to the first approach includes a plurality of active material particles and fibrous carbon that includes a first portion (C1) with a fiber diameter of 60 nm to 500 nm and a second portion (C2) with a smaller fiber diameter which is at least in contact with plural active material particles. The electrode can provide a secondary battery and battery pack with a high input/output density.

### (Second Approach)

According to a second approach, provided is a secondary battery including a positive electrode, a negative electrode, and an electrolyte. The secondary battery includes the electrode according to the first approach as at least one of the positive electrode and the negative electrode. In a case where the electrode according to the first approach is included as the negative electrode, the positive electrode may be an electrode different from that of the first approach. In a case where the electrode according to the first approach is included as the positive electrode, the negative electrode may be an electrode different from that of the first approach. The secondary battery according to the second approach may include both the aspect as a negative electrode and the aspect as a positive electrode of the electrode according to the first approach, respectively as the negative electrode and the positive electrode.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery may be, for example, a lithium secondary battery. The secondary battery includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

### 1) Negative electrode

The negative electrode may include a negative electrode current collector and a negative electrode active material-containing layer. The negative electrode may be the aspect of the electrode according to the first approach as a negative electrode. Therefore, the negative electrode current collector and the negative electrode active material-containing layer may respectively be the current collector and active material-containing layer that may be included in the electrode according to the first approach.

Of the details of the negative electrode, portions overlapping with the details described for the aspect as a negative electrode of the electrode according to the first approach are omitted. For example, the other negative electrode that may be used in a battery including the electrode according to the first approach as the positive electrode differs from the electrode according to the first approach in that fibrous carbon including both first portions C1 and second portions C2 is not contained as an electro-conductive agent.

In the negative electrode active material-containing layer of the other negative electrode, the negative electrode active material, electro-conductive agent and binder are preferably blended in proportions of 68% by mass to 96% by mass, 2% by mass to 30% by mass, and 2% by mass to 30% by mass, respectively. When the amount of electro-conductive agent is 2% by mass or more, the current collection performance of the negative electrode active material-containing layer can be improved. When the amount of binder is 2% by mass or more, binding between the active material-containing layer and current collector is sufficient, whereby excellent cycling performances can be expected. On the other hand, an amount of each of the electro-conductive agent and binder is preferably 30% by mass or less, in view of increasing the capacity.

The other negative electrode can be produced by, for example, a method similar to that for the electrode according to the first approach except that fibrous carbon including both first portions C1 and second portions C2 is not used as an electro-conductive agent.

### 2) Positive electrode

The positive electrode may include a positive electrode current collector and a positive electrode active material-containing layer. The positive electrode may be the aspect of the electrode according to the first approach as a positive electrode. Therefore, the positive electrode current collector and the positive electrode active material-containing layer may respectively be the current collector and active material-containing layer that may be included in the electrode according to the first approach.

Of the details of the positive electrode, portions overlapping with the details described for the aspect as a positive electrode of the electrode according to the first approach are omitted. For example, the other positive electrode that may be used in a battery including the electrode according to the first approach as the negative electrode differs from the electrode according to the first approach in that fibrous carbon including both first portions C1 and second portions C2 is not contained as an electro-conductive agent.

In the positive electrode active material-containing layer of the other positive electrode, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator within the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode can be produced by, for example, a method similar to that for the electrode according to the first approach except that fibrous carbon including both first portions C1 and second portions C2 is not used as an electro-conductive agent.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), lithium bistrifluoromethylsulfonylimide (LiN(CF₃SO₂)₂), and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of 1 × 10⁻⁶ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula Li₁₊ₓMα₂ (PO₄)₃. Mα in the above general formula is, for example, one or more selected from the group consisting of titanium (Ti), germanium (Ge), strontium (Sr), zirconium (Zr), tin (Sn), aluminum (Al), and calcium (Ca). The subscript x is within the range of 0 ≤ x ≤ 2.

Specific examples of the lithium phosphate solid electrolyte having the NASICON structure include a LATP compound represented by Li₁₊ₓAlₓTi₂₋ₓ(PO₄)₃ where 0.1 ≤ x ≤ 0.5; a compound represented by Li₁₊ₓAl_{y}Mβ_{2-y}(PO₄)₃ where Mβ is one or more selected from the group consisting of Ti, Ge, Sr, Zr, Sn, and Ca, 0 ≤ x ≤ 1, and 0 ≤ y ≤ 1; a compound represented by Li₁₊ₓAlₓGe₂₋ₓ(PO₄)₃ where 0 ≤ x ≤ 2; a compound represented by Li₁₊ₓAlₓZr₂₋ₓ(PO₄)₃ where 0 ≤ x ≤ 2; a compound represented by Li_{1+x+y}AlₓMγ₂₋ₓSi_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCaₓ(PO₄)₃ where 0 ≤ x < 1.

In addition to the above lithium phosphate solid electrolyte, examples of the oxide solid electrolyte include amorphous LIPON compounds represented by LiₓPO_{y}N_{z} where 2.6 ≤ x ≤ 3.5, 1.9 ≤ y ≤ 3.8, and 0.1 ≤ z ≤ 1.3 (e.g., Li_{2.9}PO_{3.3}N_{0.46}) ; a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃Mδ₂₋ₓZrₓO₁₂ where Mδ is one or more selected from the group consisting of Nb and Ta, and 0 ≤ x ≤ 2 (e.g., Li₇La₃Zr₂O₁₂) ; and a compound having a perovskite structure and represented by La_{2/3-x}LiₓTiO₃ where0.3 ≤ x ≤ 0.7.

One or more among the above compounds may be used as the solid electrolyte. Two or more of the above solid electrolytes may be used, as well.

### 4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

### 6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

### 7) Positive Electrode Terminal

The positive electrode terminal may be made of, for example, a material that is electrically stable in the potential range of 3 V to 4.5 V (vs. Li/Li⁺) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the approach will be more concretely described with reference to the drawings.

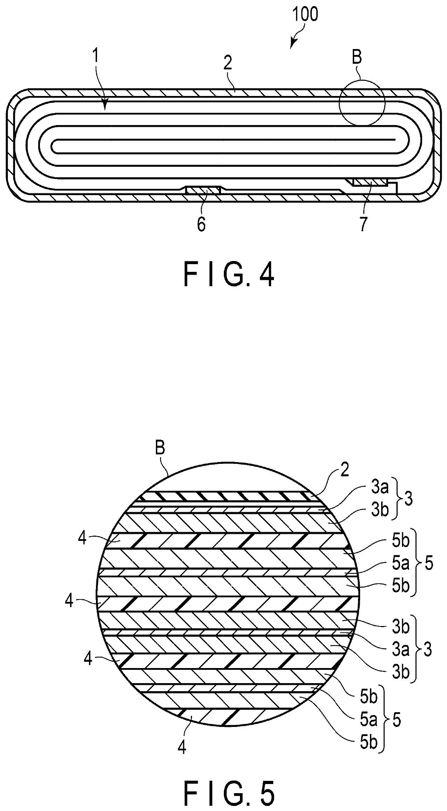

FIG. 4 is a cross-sectional view schematically showing an example of the secondary battery. FIG. 5 is an enlarged cross-sectional view of section B of the secondary battery shown in FIG. 4.

The secondary battery 100 shown in FIGS. 4 and 5 includes a bag-shaped container member 2 shown in FIG. 4, an electrode group 1 shown in FIGS. 4 and 5, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 4, the electrode group 1 is a wound electrode group in a flat form. The wound electrode group 1 in a flat form includes a negative electrode 3, a separator 4, and a positive electrode 5, as shown in FIG. 5. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 5. For the other portions of the negative electrode 3, negative electrode active material-containing layers 3b are formed on both of obverse and reverse surfaces of the negative electrode current collector 3a.

The positive electrode 5 includes a positive electrode current collector 5a and positive electrode active material-containing layers 5b formed on both of obverse and reverse surfaces of the positive electrode current collector 5a.

As shown in FIG. 4, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

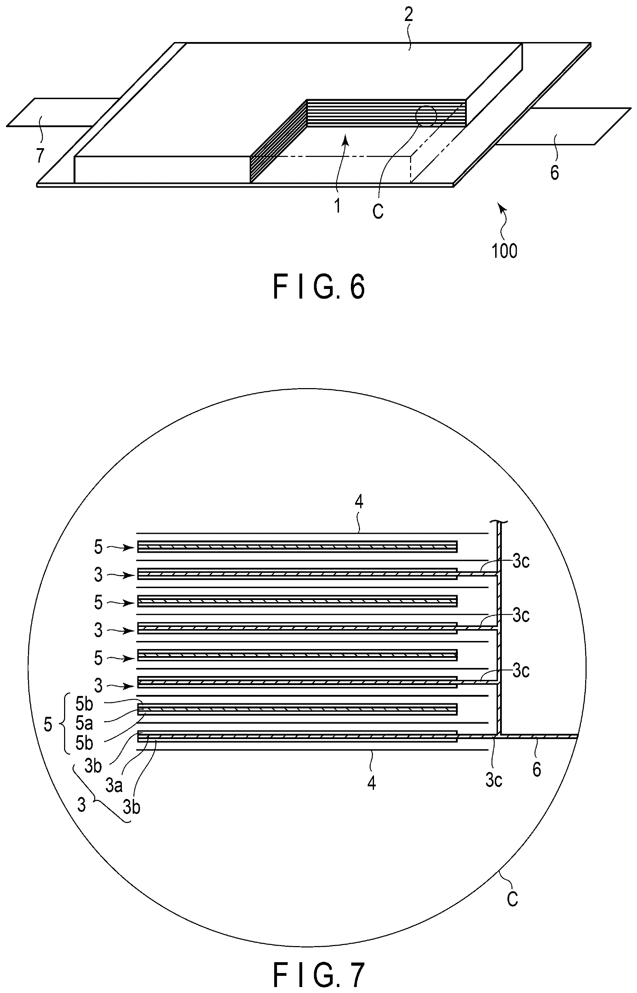

The secondary battery according to the approach is not limited to the secondary battery of the structure shown in FIGS. 4 and 5, and may be, for example, a battery of a structure shown in FIGS. 6 and 7.

FIG. 6 is a partially cut-out perspective view schematically showing another example of the secondary battery. FIG. 7 is an enlarged cross-sectional view of section C of the secondary battery shown in FIG. 6.

The secondary battery 100 shown in FIGS. 6 and 7 includes an electrode group 1 shown in FIGS. 6 and 7, a container member 2 shown in FIG. 6, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 7, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces thereof.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 7, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the second approach includes the electrode according to the first approach. Thus, the input/output density of the secondary battery is high.

### (Third Approach)

According to a third approach, a battery module is provided. The battery module includes plural of secondary batteries according to the second approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

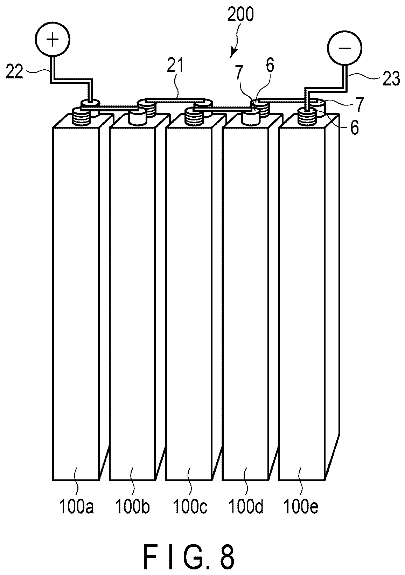

FIG. 8 is a perspective view schematically showing an example of the battery module. The battery module 200 shown in FIG. 8 includes five single-batteries 100a to 100e, four bus bars 21, a positive electrode-side lead 22, and a negative electrode-side lead 23. Each of the five single-batteries 100a to 100e is the secondary battery according to the second approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 8 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the third approach includes the secondary battery according to the second approach. Therefore, the input/output density of the battery module is high.

### (Fourth Approach)

According to a fourth approach, a battery pack is provided. The battery pack includes a battery module according to the third approach. The battery pack may include a single secondary battery according to the second approach, in place of the battery module according to the third approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

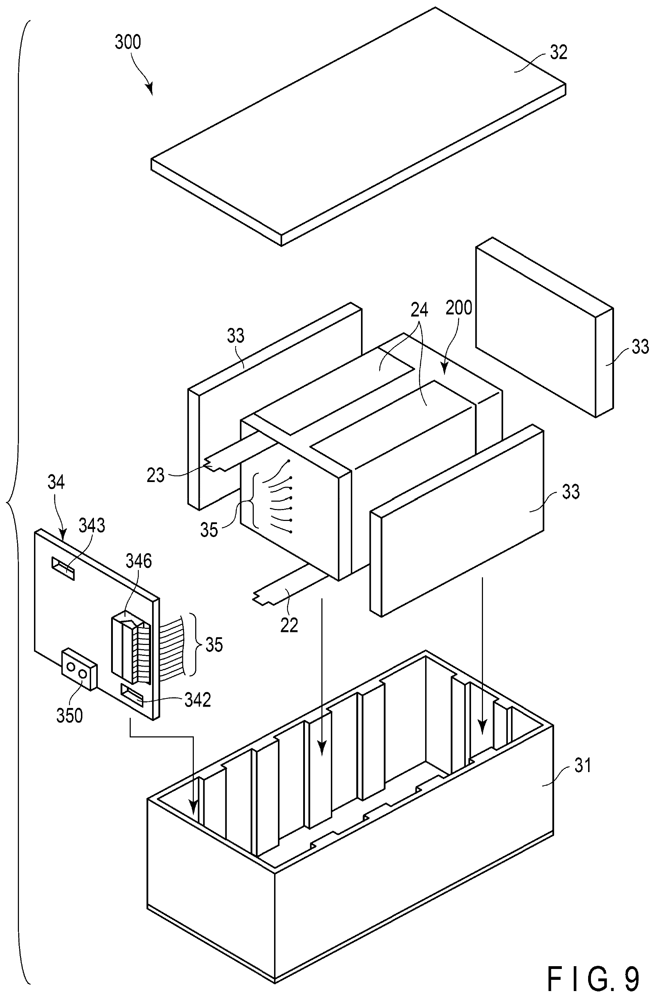

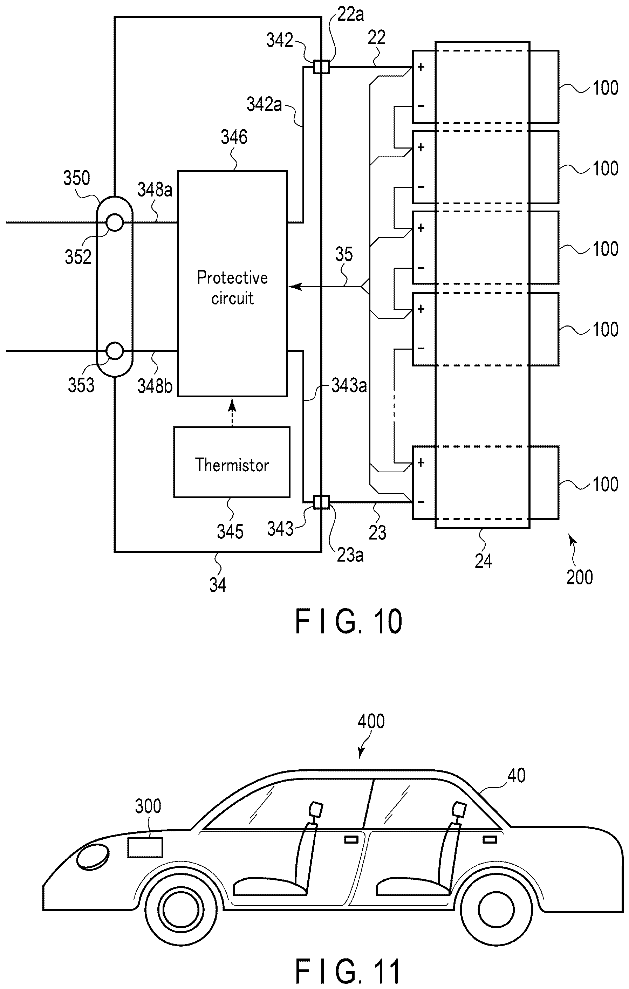

FIG. 9 is an exploded perspective view schematically showing an example of the battery pack. FIG. 10 is a block diagram showing an example of an electric circuit of the battery pack shown in FIG. 9.

A battery pack 300 shown in FIGS. 9 and 10 includes a housing container 31, a lid 32, protective sheets 33, a battery module 200, a printed wiring board 34, wires 35, and an insulating plate (not shown).

The housing container 31 shown in FIG. 9 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the second approach. The plural single-batteries 100 are electrically connected in series, as shown in FIG. 10. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode(s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fourth approach is provided with the secondary battery according to the second approach or the battery module according to the third approach. Accordingly, the input/output density of the battery pack is high.

### (Fifth Approach)

According to a fifth approach, a vehicle is provided. The battery pack according to the fourth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may be installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 11 is a partially see-through diagram schematically showing an example of the vehicle.

A vehicle 400, shown in FIG. 11 includes a vehicle body 40 and a battery pack 300 according to the fourth approach. In the example shown in FIG. 11, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 11, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

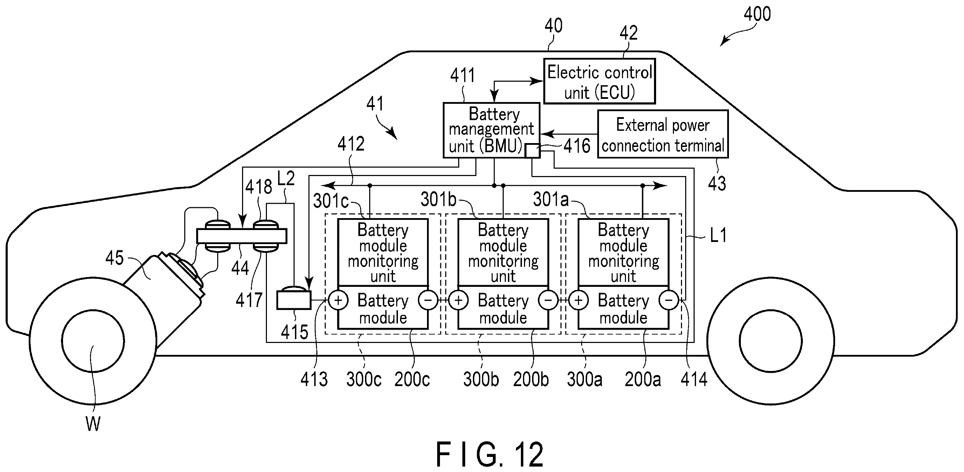

Next, with reference to FIG. 12, an aspect of operation of the vehicle according to the approach is explained.

FIG. 12 is a diagram schematically showing an example of a control system related to an electric system in the vehicle. A vehicle 400, shown in FIG. 12, is an electric automobile.

The vehicle 400, shown in FIG. 12, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 12, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 12) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the fifth approach is installed with the battery pack according to the fourth approach. Thus, a high performance vehicle can be provided.

### Examples

Examples will be described below; however, the present invention is not limited to the examples described below as long as the spirit of the present invention is not exceeded.

### (Example 1)

In Example 1, a nonaqueous electrolyte battery was produced by the following procedure.

### <Production of negative electrode>

As a negative electrode active material, particles of a monoclinic niobium titanium oxide having a composition represented by the formula TiNb₂O₇ were prepared. Carbon nanotubes (CNTs) as an electro-conductive agent, and carboxymethyl cellulose (CMC) and styrene-butadiene rubber (SBR) as binders were prepared. As the CNTs, CNTs partially having a fiber diameter of about 1 nm to 30 nm and partially having a fiber diameter of about 60 nm to 500 nm were prepared. These were mixed in pure water such that the mass ratio of negative electrode active material : CNTs : CMC : SBR was 96.6 : 0.4 : 1 : 2, and a slurry was thus obtained. The slurry was applied onto both obverse and reverse principal surfaces of a band-shaped current collector made of aluminum foil having a thickness of 15 µm, and the coating was dried. Here, on one side along the longitudinal direction of the current collector, an uncoated portion where the slurry was not applied was left on both obverse and reverse surfaces. Thus obtained was a composite body including a current collector and negative electrode active material-containing layers formed on both surfaces of the current collector. The amount per surface of coating of the negative electrode active material-containing layer was adjusted to 100 g/m². Next, the obtained composite body was subjected to roll pressing such that the density of the negative electrode active material-containing layer was 2.7 g/cm³. The obtained electrode was observed by SEM, and for the CNTs, a portion having a fiber diameter (W1) of 480 nm and a portion having a fiber diameter (W2) of 15 nm were confirmed. The former is referred to as a C1 portion, and the latter is referred to as a C2 portion. After that, the electrode was punched into strip shapes each having an uncoated portion of the current collector on one side along the lateral direction of the electrode, which were further subjected to vacuum drying; thus, negative electrodes were obtained.

### <Production of positive electrode>

As a positive electrode active material, particles of a lithium-nickel-cobalt-manganese composite oxide represented by the formula LiNi_{0.5}Co_{0.2}Mn_{0.3}O₂ were prepared. Further, acetylene black (AB) as an electro-conductive agent and polyvinylidene fluoride (PVdF) as a binder were prepared. These were mixed such that the mass ratio of positive electrode active material : AB : PVdF was 90 : 5 : 5, and a mixture was obtained. Next, the obtained mixture was dispersed in a N-methylpyrrolidone (NMP) solvent to prepare a positive electrode slurry. The slurry was applied onto both obverse and reverse principal surfaces of a band-shaped current collector made of aluminum foil having a thickness of 15 µm, and the coating was dried. Here, on one side along the longitudinal direction of the current collector, uncoated portions where the slurry was not applied were left on both obverse and reverse surfaces. Thus obtained was a composite body including a current collector and positive electrode active material-containing layers formed on both surfaces of the current collector. The amount per surface of coating of the positive electrode active material-containing layer was adjusted to 125 g/m². Next, the obtained composite body was subjected to roll pressing such that the density of the positive electrode active material-containing layer was 3.05 g/cm³. The obtained electrode was punched into strip shapes each having an uncoated portion of the current collector on one side along the lateral direction, which were further subjected to vacuum drying; thus, positive electrodes were obtained.

### <Production of electrode group>

A polyethylene (PE) separator having a thickness of 15 µm was prepared. Next, the prepared separator was folded in a zigzag manner, and the separator, six of the above-described negative electrodes, and five of the above-described positive electrodes were stacked in the order of a negative electrode, the separator, a positive electrode, and the separator to obtain a stacked body. Specifically, the negative electrodes and the positive electrodes were alternately inserted into spaces defined by the separator folded in a zigzag manner. The negative electrodes and the positive electrodes were arranged such that areas of 50 mm in length and 50 mm in width overlapped. Further, the negative electrode and the positive electrode were superimposed in opposite directions such that the uncoated portions of the current collectors of the negative electrode and the positive electrode were located on opposite sides of the stacked body. Next, the stacked body was pressed. The pressing of the stacked body was performed at room temperature (25°C) by applying a load of 80 kN for 1 minute. Thus, an electrode group was produced.

### <Preparation of nonaqueous electrolyte>

A nonaqueous electrolyte was prepared by the following procedure. First, propylene carbonate (PC) and diethyl carbonate (DEC) were mixed such that the volume ratio PC : DEC was 1 : 2, and a mixed solvent was obtained. Lithium hexafluorophosphate LiPF₆ was dissolved in the mixed solvent at a concentration of 1 M, and a liquid nonaqueous electrolyte was obtained.

### <Assembly of a battery>

The electrode group was housed in a pack made of laminate film, and vacuum drying was performed at 80°C for 10 hours. Used as the laminate film was a laminate film having a total thickness of 0.1 mm, in which polypropylene layers were formed on both surfaces of aluminum foil having a thickness of 40 µm. The above-described nonaqueous electrolyte was put in. Thereafter, the laminate film pack was subjected to heat sealing under reduced pressure; thus, a battery was produced.

### (Example 2)

In Example 2, a nonaqueous electrolyte battery was produced by a procedure similar to that for Example 1 except that negative electrodes produced as follows were used instead.

### <Production of negative electrode>

As a negative electrode active material, particles of lithium titanate having a composition represented by the formula Li₄Ti₅O₁₂ were prepared. CNTs as an electro-conductive agent and PVdF as a binder were prepared. As the CNTs, CNTs partially having a fiber diameter of about 1 nm to 30 nm and partially having a fiber diameter of about 60 nm to 500 nm were prepared. These were mixed in NMP such that the mass ratio of negative electrode active material : CNTs : PVdF was 96.6 : 0.4 : 3, and a slurry was thus obtained. The slurry was applied onto both obverse and reverse principal surfaces of a band-shaped current collector made of aluminum foil having a thickness of 15 µm, and the coating was dried. Here, on one side along the longitudinal direction of the current collector, uncoated portions where the slurry was not applied were left on both obverse and reverse surfaces. Thus obtained was a composite body including a current collector and negative electrode active material-containing layers formed on both surfaces of the current collector. The amount per surface of coating of the negative electrode active material-containing layer was adjusted to 135 g/m². Next, the obtained composite body was subjected to roll pressing such that the density of the negative electrode active material-containing layer was 2.3 g/cm³. The obtained electrode was observed by SEM, and for the CNTs, presence of a portion C1 having a fiber diameter W1 of 480 nm and a portion C2 having a fiber diameter W2 of 15 nm were confirmed. After that, the electrode was punched into strip shapes each having an uncoated portion of the current collector on one side along the lateral direction of the electrode, which were further subjected to vacuum drying; thus, negative electrodes were obtained.

### (Example 3)

In Example 3, a nonaqueous electrolyte battery was produced by a procedure similar to that for Example 1 except that negative electrodes and positive electrodes produced as follows were used instead.

### <Production of negative electrode>

As a negative electrode active material, particles of a monoclinic niobium titanium oxide having a composition represented by the formula TiNb₂O₇ were prepared. AB as an electro-conductive agent and CMC and SBR as binders were prepared. These were mixed in pure water such that the mass ratio of negative electrode active material : AB : CMC : SBR was 94 : 3 : 1 : 2, and a slurry was thus obtained. The slurry was applied onto both obverse and reverse principal surfaces of a band-shaped current collector made of aluminum foil having a thickness of 15 µm, and the coating was dried. Here, on one side along the longitudinal direction of the current collector, uncoated portions where the slurry was not applied were left on both obverse and reverse surfaces. Thus obtained was a composite body including a current collector and negative electrode active material-containing layers formed on both surfaces of the current collector. The amount per surface of coating of the negative electrode active material-containing layer was adjusted to 100 g/m². Next, the obtained composite body was subjected to roll pressing such that the density of the negative electrode active material-containing layer was 2.55 g/cm³. The obtained electrode was punched into strip shapes each having an uncoated portion of the current collector on one side along the lateral direction, which were further subjected to vacuum drying; thus, negative electrodes were obtained.

### <Production of positive electrode>

As a positive electrode active material, particles of a lithium-nickel-cobalt-manganese composite oxide represented by the formula LiNi_{0.5}Co_{0.2}Mn_{0.3}O₂ were prepared. Further, CNTs as an electro-conductive agent and PVdF as a binder were prepared. As the CNTs, CNTs partially having a fiber diameter of about 1 nm to 30 nm and partially having a fiber diameter of about 60 nm to 500 nm were prepared. These were mixed such that the mass ratio of positive electrode active material : CNTs : PVdF was 94.5 : 0.5 : 5, and a mixture was obtained. Next, the obtained mixture was dispersed in an NMP solvent to prepare a positive electrode slurry. The slurry was applied onto both obverse and reverse principal surfaces of a band-shaped current collector made of aluminum foil having a thickness of 15 µm, and the coating was dried. Here, on one side along the longitudinal direction of the current collector, uncoated portions where the slurry was not applied were left on both obverse and reverse surfaces. Thus obtained was a composite body including a current collector and positive electrode active material-containing layers formed on both surfaces of the current collector. The amount per surface of coating of the positive electrode active material-containing layer was adjusted to 125 g/m². Next, the obtained composite body was subjected to roll pressing such that the density of the positive electrode active material-containing layer was 3.25 g/cm³. The obtained electrode was observed by SEM, and for the CNTs, presence of a portion C1 having a fiber diameter W1 of 480 nm and a portion C2 having a fiber diameter W2 of 15 nm were confirmed. After that, the electrode was punched into strip shapes having an uncoated portion of the current collector on one side along the lateral direction of the electrode, which were further subjected to vacuum drying; thus, positive electrodes were obtained.

### (Example 4)

In Example 4, a nonaqueous electrolyte battery was produced by a procedure similar to that for Example 1 except that negative electrodes produced in a manner similar to that for Example 3 and positive electrodes produced as follows were used instead.

### <Production of positive electrode>

As a positive electrode active material, particles of lithium manganese iron phosphate represented by the formula LiMn_{0.7}Fe_{0.3}PO₄ were prepared. Further, CNTs as an electro-conductive agent and PVdF as a binder were prepared. As the CNTs, CNTs partially having a fiber diameter of about 1 nm to 30 nm and partially having a fiber diameter of about 60 nm to 500 nm were prepared. These were mixed such that the mass ratio of positive electrode active
material : CNTs : PVdF was 94.5 : 0.5 : 5, and a mixture was obtained. Next, the obtained mixture was dispersed in an NMP solvent to prepare a positive electrode slurry. The slurry was applied onto both obverse and reverse principal surfaces of a band-shaped current collector made of aluminum foil having a thickness of 15 µm, and the coating was dried. Here, on one side along the longitudinal direction of the current collector, uncoated portions where the slurry was not applied were left on both obverse and reverse surfaces. Thus obtained was a composite body including a current collector and positive electrode active material-containing layers formed on both surfaces of the current collector. The amount per surface of coating of the positive electrode active material-containing layer was adjusted to 140 g/m². Next, the obtained composite body was subjected to roll pressing such that the density of the positive electrode active material-containing layer was 2.3 g/cm³. The obtained electrode was observed by SEM, and for the CNTs, presence of a portion C1 having a fiber diameter W1 of 480 nm and a portion C2 having a fiber diameter W2 of 15 nm were confirmed. After that, the electrode was punched into strip shapes each having an uncoated portion of the current collector on one side along the lateral direction of the electrode, which were further subjected to vacuum drying; thus, positive electrodes were obtained.

### (Example 5)

In Example 5, a nonaqueous electrolyte battery was produced by a procedure similar to that for Example 1 except that a negative electrode produced in a manner similar to that for Example 3 and a positive electrode produced as follows were used instead.

### <Production of positive electrode>

As a positive electrode active material, particles of a lithium-nickel-manganese composite oxide represented by the formula LiNi_{0.5}Mn_{1.5}O₄ were prepared. Further, CNTs as an electro-conductive agent and PVdF as a binder were prepared. As the CNTs, CNTs partially having a fiber diameter of about 1 nm to 30 nm and partially having a fiber diameter of about 60 nm to 500 nm were prepared. These were mixed such that the mass ratio of positive electrode active
material : CNTs : PVdF was 94.5 : 0.5 : 5, and a mixture was obtained. Next, the obtained mixture was dispersed in an NMP solvent to prepare a positive electrode slurry. The slurry was applied onto both obverse and reverse principal surfaces of a band-shaped current collector made of aluminum foil having a thickness of 15 µm, and the coating was dried. Here, on one side along the longitudinal direction of the current collector, uncoated portions where the slurry was not applied were left on both obverse and reverse surfaces. Thus obtained was a composite body including a current collector and positive electrode active material-containing layers formed on both surfaces of the current collector. The amount per surface of coating of the positive electrode active material-containing layer was adjusted to 170 g/m². Next, the obtained composite body was subjected to roll pressing such that the density of the positive electrode active material-containing layer was 2.75 g/cm³. The obtained electrode was observed by SEM, and for the CNTs, presence of a portion C1 having a fiber diameter W1 of 480 nm and a portion C2 having a fiber diameter W2 of 15 nm were confirmed. After that, the electrode was punched into strip shapes each having an uncoated portion of the current collector on one side along the lateral direction of the electrode, which were further subjected to vacuum drying; thus, positive electrodes were obtained.

### (Example 6)

In Example 6, a nonaqueous electrolyte battery was produced by a procedure similar to that for Example 1 except that used instead as a negative electrode active material were particles of a monoclinic niobium titanium oxide having a composition represented by the formula TiNb₂O₇ in which fine oxide particles of about 100 nm were present on the particle surfaces.

### (Example 7)

In Example 7, a nonaqueous electrolyte battery was produced by a procedure similar to that for Example 1 except that used instead as an electro-conductive agent of the negative electrode were CNTs that were in bundles in part, with portions C1 each having a fiber diameter W1 of about 1 nm to 30 nm being integrated with portions C2 each having a fiber diameter W2 of about 60 nm to 500 nm.

### (Example 8)

In Example 8, a nonaqueous electrolyte battery was produced by a procedure similar to that for Example 1 except that a positive electrode produced in a manner similar to that for Example 3 was used instead while a negative electrode was produced in a manner similar to that for Example 1.

### (Example 9)

In Example 9, a nonaqueous electrolyte battery was produced by a procedure similar to that for Example 1 except that negative electrodes produced as follows were used instead.

### <Production of negative electrode>

As a negative electrode active material, particles of a monoclinic niobium titanium oxide having a composition represented by the formula TiNb₂O₇ were prepared. CNTs and AB as electro-conductive agents and CMC and SBR as binders were prepared. As the CNTs, CNTs partially having a fiber diameter of about 1 nm to 30 nm and partially having a fiber diameter of about 60 nm to 500 nm were prepared. These were mixed in pure water such that the mass ratio of negative electrode active material : CNTs : AB : CMC : SBR was
95.9 : 0.4 : 0.7 : 1 : 2, and a slurry was thus obtained. The slurry was applied onto both obverse and reverse principal surfaces of a band-shaped current collector made of aluminum foil having a thickness of 15 µm, and the coating was dried. Here, on one side along the longitudinal direction of the current collector, uncoated portions where the slurry was not applied were left on both obverse and reverse surfaces. Thus obtained was a composite body including a current collector and negative electrode active material-containing layers formed on both surfaces of the current collector. The amount per surface of coating of the negative electrode active material-containing layer was adjusted to 100 g/m². Next, the obtained composite body was subjected to roll pressing such that the density of the negative electrode active material-containing layer was 2.7 g/cm³. The obtained electrode was observed by SEM, and for the CNTs, presence of a portion C1 having a fiber diameter W1 of 480 nm and a portion C2 having a fiber diameter W2 of 15 nm were confirmed. After that, the electrode was punched into strip shapes each having an uncoated portion of the current collector on one side along the lateral direction of the electrode, which were further subjected to vacuum drying; thus, negative electrodes were obtained.

### (Comparative Example 1)

In Comparative Example 1, a nonaqueous electrolyte battery was produced by a procedure similar to that for Example 1 except that used instead as an electro-conductive agent of the negative electrode were single-walled CNTs including only portions having fiber diameters of about 1 nm to 30 nm.

### (Comparative Example 2)

In Comparative Example 2, a nonaqueous electrolyte battery was produced by a procedure similar to that for Example 1 except that used instead as an electro-conductive agent of the negative electrode were multi-walled CNTs including only portions having fiber diameters of about 60 nm to 500 nm.

Table 1 below summarizes the designs of the nonaqueous electrolyte batteries produced in Examples 1 to 9 and Comparative Examples 1 and 2. Specifically, the designs of the electrodes of the batteries are summarized. More specifically, the electrode active material and the electro-conductive agent used for each of the positive electrode and the negative electrode, and the mass per unit area and the density of the electrode active material-containing layer are shown. Further, Table 1 shows in what form the fibrous carbons (CNTs) used for the electro-conductive agent include first portions C1 having fiber diameters of 60 nm to 500 nm and second portions C2 having smaller fiber diameters than the first portions C1. For the positive electrode active material, "NCM" refers to a lithium-nickel-cobalt-manganese composite oxide LiNi_{0.5}Co_{0.2}Mn_{0.3}O₂, "LMFP" refers to lithium iron manganese phosphate LiMn_{0.7}Fe_{0.3}PO₄, and "LNMO" refers to a lithium-nickel-manganese composite oxide LiNi_{0.5}Mn_{1.5}O₄. For the negative electrode active material, "TNO" refers to a monoclinic niobium titanium oxide TiNb₂O₇, and "TLO" refers to a lithium titanium oxide Li₄Ti₅O₁₂. For the electro-conductive agent, "AB" refers to acetylene black, "CNT" refers to a carbon nanotube, "SWCNT" refers to a single-walled carbon nanotube, and "MWCNT" refers to a multi-walled carbon nanotube.

**[Table 1]**

| | Fibrous carbon contained in positive electrode or negative electrode | Positive electrode active material | Positive electrode electro-conductive agent | Mass per unit area of positive electrode (g/m²) | Density of positive electrode (g/cm³) | Negative electrode active material | Negative electrode electro-conductive agent | Mass per unit area of negative electrode (g/m²) | Density of negative electrode (g/cm³) |
|---|---|---|---|---|---|---|---|---|---|
| Example 1 | CNTs including first portions C1 and second portions C2 | NCM | AB | 125 | 3.05 | TNO | CNTs described leftward | 100 | 2.7 |
| Example 2 | CNTs including first portions C1 and second portions C2 | NCM | AB | 125 | 3.05 | TLO | CNTs described leftward | 135 | 2.3 |
| Example 3 | CNTs including first portions C1 and second portions C2 | NCM | CNTs described leftward | 125 | 3.25 | TNO | AB | 100 | 2.55 |
| Example 4 | CNTs including first portions C1 and second portions C2 | LMFP | CNTs described leftward | 140 | 2.3 | TNO | AB | 100 | 2.55 |
| Example 5 | CNTs including first portions C1 and second portions C2 | LNMO | CNTs described leftward | 170 | 2.75 | TNO | AB | 100 | 2.55 |
| Example 6 | CNTs including first portions C1 and second portions C2 | NCM | AB | 125 | 3.05 | TNO with fine oxide particles | CNTs described leftward | 100 | 2.7 |
| Example 7 | Branched CNTs including portions where first portions C1 and second portions C2 are integrated | NCM | AB | 125 | 3.05 | TNO | CNTs described leftward | 100 | 2.7 |
| Example 8 | CNTs including first portions C1 and second portions C2 | NCM | CNTs described leftward | 125 | 3.25 | TNO | CNTs described leftward | 100 | 2.7 |
| Example 9 | CNTs including first portions C1 and second portions C2 | NCM | AB | 125 | 3.05 | TNO | CNTs described leftward + AB | 100 | 2.7 |
| Comparativ e Example 1 | SWCNTs including only second portions C2 | NCM | AB | 125 | 3.05 | TNO | SWCNTs described leftward | 100 | 2.7 |
| Comparativ e Example 2 | MWCNTs including only first portions C1 | NCM | AB | 125 | 3.05 | TNO | MWCNTs described leftward | 100 | 2.7 |

### <Evaluation>

For each of the batteries produced in Examples 1 to 9 and Comparative Examples 1 and 2, as an index of rapid discharge performance, discharge was performed at 0.2C and 5C, and the ratio of the 5C discharge capacity to the 0.2C capacity was determined. The test results are shown in Table 2 below.

**[Table 2]**

| | 5C/0.2C Capacity ratio at 25°C (%) |
|---|---|
| Example 1 | 75 |
| Example 2 | 72 |
| Example 3 | 71 |
| Example 4 | 69 |
| Example 5 | 70 |
| Example 6 | 77 |
| Example 7 | 78 |
| Example 8 | 80 |
| Example 9 | 77 |
| Comparative Example 1 | 63 |
| Comparative Example 2 | 60 |

As shown in Table 2, in the nonaqueous electrolyte battery produced in each of Examples 1 to 9, a higher rapid discharge capacity was obtained than in the nonaqueous electrolyte batteries produced in Comparative Examples 1 and 2. From the results of the test, it can be seen that high input/output performance was obtained by using, as an electrode electro-conductive agent, fibrous carbon including both first portions C1 having large fiber diameters and second portions C2 having small fiber diameters.

According to at least one approach and example describe above, an electrode is provided. The electrode includes a plurality of active material particles and fibrous carbon. The fibrous carbon includes a first portion C1 having a fiber diameter W1 within a range of 60 nm or more and 500 nm or less and a second portion C2 having a fiber diameter W2 smaller than the fiber diameter W1. At least the second portion includes those in contact with plurality of the active material particles. The above electrode can provide a secondary battery and battery pack that exhibit high input/output density, and a vehicle having the battery pack installed thereon.

While certain arrangements have been described, these arrangements have been presented by way of example only, and are not intended to limit the scope of the inventions. Indeed, the electrodes, secondary batteries, and the like described herein may be embodied in a variety of other forms; furthermore various omissions, substitutions and changes in the form of the apparatuses described herein may be made.

The present disclosure also encompasses the following approaches of electrodes:
1. An electrode comprising:
   a plurality of active material particles; and
   fibrous carbon including a first portion having a fiber diameter W1 within a range of 60 nm or more and 500 nm or less and a second portion having a fiber diameter W2 smaller than the fiber diameter W1, at least part of the second portion being in contact with plurality of the active material particles.
2. The electrode according to clause 1, wherein the first portion and the second portion are integrated in at least part of the fibrous carbon.
3. The electrode according to clause 1 or 2, wherein, on a surface of the electrode, an area ratio between an area A1 of the first portion and an area A2 of the second portion satisfies 0.5 < A1/A2 < 50.
4. The electrode according to any one of clauses 1 to 3, wherein the fiber diameter W2 of the second portion is within a range of 1 nm or more and 15 nm or less.
5. The electrode according to any one of clauses 1 to 4, wherein a ratio of a length L of the fibrous carbon to the fiber diameter W2 of the second portion on a surface of the electrode satisfies 100 < L/W2.
6. The electrode according to any one of clauses 1 to 5, wherein the active material particle contains at least one selected from the group consisting of lithium titanate and a niobium titanium oxide.
7. The electrode according to any one of clauses 1 to 5, wherein the active material particle contains at least one selected from the group consisting of a lithium-nickel-cobalt-manganese composite oxide, a lithium transition metal phosphate, and a lithium-nickel-manganese composite oxide.
8. A secondary battery comprising:
   a positive electrode;
   a negative electrode; and
   an electrolyte,
   at least one of the positive electrode and the negative electrode comprising the electrode according to any one of clauses 1 to 7.
9. A battery pack comprising the secondary battery according to clause 8.
10. The battery pack according to clause 9, further comprising:
   an external power distribution terminal; and
   a protective circuit.
11. The battery pack according to clause 9 or 10, comprising plural of the secondary battery, the secondary batteries being electrically connected in series, in parallel, or in combination of in-series connection and in-parallel connection.
12. A vehicle comprising the battery pack according to any one of clauses 9 to 11.
13. The vehicle according to clause 12, wherein the vehicle comprises a mechanism configured to convert kinetic energy of the vehicle into regenerative energy.

## Claims

1. An electrode (10) comprising:
a plurality of active material particles (11); and
fibrous carbon (12) including a first portion (C1) having a fiber diameter W1 within a range of 60 nm or more and 500 nm or less and a second portion (C2) having a fiber diameter W2 smaller than the fiber diameter W1, at least part of the second portion (C2) being in contact with plurality of the active material particles (11).

2. The electrode (10) according to claim 1, wherein the first portion (C1) and the second portion (C2) are integrated in at least part of the fibrous carbon (12).

3. The electrode (10) according to claim 1 or 2, wherein, on a surface of the electrode (10), an area ratio between an area A1 of the first portion (C1) and an area A2 of the second portion (C2) satisfies 0.5 < A1/A2 < 50.

4. The electrode (10) according to any one of claims 1 to 3, wherein the fiber diameter W2 of the second portion (C2) is within a range of 1 nm or more and 15 nm or less.

5. The electrode (10) according to any one of claims 1 to 4, wherein a ratio of a length L of the fibrous carbon (12) to the fiber diameter W2 of the second portion (C2) on a surface of the electrode (10) satisfies 100 < L/W2.

6. The electrode (10) according to any one of claims 1 to 5, wherein the active material particle (11) contains at least one selected from the group consisting of lithium titanate and a niobium titanium oxide.

7. The electrode (10) according to any one of claims 1 to 5, wherein the active material particle (11) contains at least one selected from the group consisting of a lithium-nickel-cobalt-manganese composite oxide, a lithium phosphate, and a lithium-nickel-manganese composite oxide.

8. A secondary battery (100) comprising:
a positive electrode (5);
a negative electrode (3); and
an electrolyte,
at least one of the positive electrode (5) and the negative electrode (3) comprising the electrode (10) according to any one of claims 1 to 7.

9. A battery pack (300) comprising the secondary battery (100) according to claim 8.

10. The battery pack (300) according to claim 9, further comprising:
an external power distribution terminal (350); and
a protective circuit (346).

11. The battery pack (300) according to claim 9 or 10, comprising plural of the secondary battery (200), the secondary batteries (200) being electrically connected in series, in parallel, or in combination of in-series connection and in-parallel connection.

12. A vehicle (400) comprising the battery pack (300) according to any one of claims 9 to 11.

13. The vehicle (400) according to claim 12, wherein the vehicle (400) comprises a mechanism configured to convert kinetic energy of the vehicle (400) into regenerative energy.
